(19) **Europäisches Patentamt European Patent Office Office européen des brevets**

(11) **EP 1 723 778 B1**

(12) **FASCICULE DE BREVET EUROPEEN**

(45) Date de publication et mention de la délivrance du brevet:
**13.08.2008 Bulletin 2008/33**

(51) Int Cl.:
***H04M 3/523*** *(2006.01)*

(21) Numéro de dépôt: **05736602.3**

(22) Date de dépôt: **08.03.2005**

(86) Numéro de dépôt international:
**PCT/FR2005/000555**

(87) Numéro de publication internationale:
**WO 2005/088950 (22.09.2005 Gazette 2005/38)**

(54) **SOLUTION POUR L'ESTIMATION DES INTENTIONS D'APPELS ET DES RAPPELS**

SYSTEM ZUR SCHÄTZUNG VON ANRUF- UND RÜCKRUFABSICHTEN

SYSTEM FOR ESTIMATING CALL AND CALL-BACK INTENTS

(84) Etats contractants désignés:
**AT BE BG CH CY CZ DE DK EE ES FI FR GB GR HU IE IS IT LI LT LU MC NL PL PT RO SE SI SK TR**

(30) Priorité: **08.03.2004 FR 0450462**

(43) Date de publication de la demande:
**22.11.2006 Bulletin 2006/47**

(73) Titulaire: **Bouygues Telecom**
**92100 Boulogne Billancourt (FR)**

(72) Inventeurs:
  • **CHAUVET, Fabrice**
    **F-92290 Châtenay-Malabry (FR)**
  • **NAIT-ABDALLAH, Rabie M.**
    **F-92130 Issy les Moulineaux (FR)**
  • **VATINLEN, Bénédicte**
    **F-92100 Boulogne-Billancourt (FR)**
  • **MEYRIGNAC, Alexandre**
    **F- 13004 Marseille (FR)**

(74) Mandataire: **Bredema**
    **38, avenue de l'Opéra**
    **75002 Paris (FR)**

(56) Documents cités:
**EP-A- 0 863 650**          **WO-A-01/63894**
**WO-A-01/80540**          **US-A1- 2001 000 458**

**Description**

La présente invention se rapporte au domaine des files d'attente.

La présente invention se rapporte plus particulièrement à l'estimation des intentions d'appels et de rappels dans un centre d'appels.

Les systèmes basés sur des files d'attente se retrouvent dans de nombreux secteurs d'activité. Il s'agit, d'une manière générale, d'un système constitué d'un ou plusieurs serveurs destinés à répondre à des clients qui arrivent de manière aléatoire. Si, à l'arrivée d'un client, aucun serveur n'est disponible, il attend dans une file d'attente avant d'être servi. Plusieurs exemples dans différents domaines d'activité peuvent illustrer ce type de systèmes. On peut citer, à titre d'exemple, des véhicules qui attendent à un péage sur autoroute, des paquets de données en attente de traitement dans un réseau informatique ou encore des clients appelant un centre d'appels qui attendent qu'un conseiller de clientèle leur réponde.

L'art antérieur connaît essentiellement des solutions d'estimation du temps d'attente dans une file d'attente d'un centre d'appel.

L'art antérieur connaît déjà, par la demande de brevet américain US 59 05793 (Lucent) un procédé de sélection d'appels en attente basée sur les temps d'attente anticipés. Le temps d'attente maximum pour les appelants dans un centre d'appel est diminué en sélectionnant, pour un agent qui vient juste d'être disponible pour traiter un appel, un appel en attente de haute priorité qui devrait attendre le plus longtemps s'il n'était pas sélectionné à ce moment-là. Les temps d'attente anticipés sont calculés pour les appels en tête des files non vides d'appels de haute priorité qui correspondent aux compétences de l'agent. Le temps d'attente anticipé d'un appel est calculé comme étant le temps d'attente présent (écoulé) de l'appel plus le taux moyen d'avance des appels dans la file d'attente des appels. L'appel avec le temps d'attente anticipé le plus long est alors choisi en premier et est transféré à l'agent disponible afin d'être traité. Le processus est répété chaque fois qu'un agent devient disponible.

L'art antérieur connaît également, par la demande de brevet PCT WO 01/63894 (*Siemens*), un système et un procédé permettant de prédire le temps d'attente d'un appelant à un centre d'appel. Le centre d'appel établit un groupe d'agents pour lequel l'appelant peut être mis en file d'attente. Ce groupe d'agents choisis peut dépendre des capacités que possède chaque agent, du type de service requis par l'appelant, de la priorité de l'appelant, de l'heure, du jour de la semaine et d'autres conditions. Une estimation initiale du temps d'attente peut alors être transmise à l'appelant qui vient d'être placé en file d'attente. Étant donné que les conditions d'un appelant peuvent se modifier de façon dynamique, la position d'un appelant dans la file d'attente peut également changer, ainsi que le groupe d'agents disponibles. Des mises à jour périodiques de l'estimation du temps d'attente peuvent également être transmises à l'appelant en file d'attente. Le temps d'attente d'un appelant peut être estimé sur la base des intervalles moyens qui séparent les arrivées d'appels récentes au centre d'appel. Un temps moyen entre arrivées peut être calculé pour les quelques derniers appels. Dans un autre mode de réalisation, le temps d'attente d'un appelant peut être estimé sur la base d'appels mis en file d'attente et sortis de la file d'attente récemment. Une table de valeurs, Wnj, est conservée dans laquelle chaque valeur indique le j-ième temps d'attente récent des appels arrivant après n appels figurant déjà dans la file d'attente. Cela permet de calculer une valeur moyenne, Wn, pour chaque n parmi tous les Wnj et de fournir un temps d'attente estimé à l'appelant, en fonction du nombre d'appels se trouvant déjà en file d'attente au moment de l'appel.

L'art antérieur connaît également, par la demande de brevet américain US 2001/0000458, un procédé pour l'estimation du temps d'attente d'un système de files d'attente pour le routage en téléphonie. Ce procédé offre l'avantage de prendre en compte les priorités entre clients. Cela dit, cette méthode nécessite un grand nombre de mesures et d'informations sur l'état du système en temps réel. Pour appliquer cette méthode, il est, par exemple, nécessaire de connaître le nombre effectif de conseillers qui répondent aux appels. Ceci impliquerait le recours à un équipement supplémentaire (CTI ou *Computer Integrated Telephony*) en plus de l'ACD (*Automatic Call Dispatcher*). Dans notre cas, le routage est effectué au niveau de l'ACD uniquement et seul un nombre limité d'informations sont connues en temps réel.

Cependant, ces documents de l'art antérieur n'évoquent pas la problématique de l'estimation du nombre d'intention d'appel, et se contentent d'évaluer un temps d'attente.

Ainsi, au-delà de la gestion du temps d'attente, la présente invention, en permettant une évaluation directe du nombre d'intention d'appels et de rappels, permet une gestion particulièrement efficace du centre d'appel.

Pour ce faire, une méthode évidente pour évaluer le nombre d'intention d'appels ou de rappels par période serait de répertorier systématiquement l'identifiant de chaque appel reçu (par exemple le numéro de téléphone). Ainsi, il est possible de déterminer à l'arrivée d'un appel, s'il s'agit d'une première intention d'appel ou bien d'un rappel. Si l'identifiant de l'appel a déjà été répertorié et qu'il n'a pas été répondu, alors il s'agit d'un rappel. Dans le cas contraire, il s'agit d'une première intention d'appel.

L'inconvénient de cette approche est qu'elle nécessite des ressources informatiques assez importantes. En effet, un centre de clientèle peut recevoir plusieurs dizaines de milliers d'appels par jour et rechercher systématiquement, à chaque arrivée d'appel, l'identifiant dans une base répertoriant tous les appels passés durant la journée peut être très consommateur de ressources système.

Le procédé proposé dans la présente invention permet de pallier cet inconvénient. En effet, il permet de déduire les statistiques relatives aux intentions d'appels et rappels uniquement à partir de celles qui concernent les appels reçus, déconnectés et abandonnés qui sont des données fournies par défaut par les ACD (Automatic Call Dispatcher).

Pour ce faire, la présente invention est du type décrit ci-dessus et elle est remarquable, dans son acception la plus large, en ce qu'elle concerne un procédé pour l'estimation des intentions d'appels et de rappels dans un centre d'appel, caractérisé en ce qu'il comprend les étapes suivantes :

(a) évaluer N correspondant au nombre de périodes sur lesquelles les évaluations des rappels s'effectuent ;

(b) évaluer $\alpha_i$ représentant la proportion d'appels déconnectés qui rappellent durant la $i^{eme}$ période suivant la déconnexion ;

(c) évaluer $\beta_i$ représentant la proportion d'appels abandonnés qui rappellent durant la $i^{eme}$ période suivant l'abandon ;

(d) évaluer les variables des états des appels:

- *Dec(p)* représentant le nombre d'appels déconnectés durant une période p ;
- *Abd(p)* représentant le nombre d'appels abandonnés durant une période p ;
- *Reçus(p)* représentant le nombre d'appels reçus durant une période p ;

(e) estimer le nombre de rappels, *rappels(p)* durant ladite période p, avec

$$rappels(p) = \sum_{i=0}^{N} \alpha_i \cdot dec(p-i) + \beta_i \cdot abd(p-i),$$ où p-i représente la période qui précède p de i périodes

(f) évaluer le nombre d'intentions d'appels durant une période p, *intentions(p) = reçus(p) - rappels(p).*

De préférence, les coefficients $\alpha_i$ et $\beta_i$ sont calculés par régression linéaire sur au moins un échantillon représentatif.

Avantageusement, ladite estimation est faite sans enregistrement systématique d'un identifiant de chaque appel reçu.

Avantageusement, la capacité dudit centre d'appel est adaptée en fonction de ladite estimation.

L'invention concerne également un système pour l'estimation des intentions d'appels et de rappels dans un centre d'appels comportant un équipement de calcul relié à des équipements associés aux postes de traitement d'appels, caractérisé en ce que l'équipement de calcul comporte des moyens de comptage du nombre d'appels déconnectés *Dec*, du nombre d'appels abandonnés *Abd,* du nombre d'appels reçus *Reçus* et un moyen de calcul pour la détermination des coefficients $\alpha_i$, $\beta_i$ et $N$ , ainsi qu'un moyen de calcul pour la détermination des variables du nombre de rappels et du nombre d'intentions d'appels

$$rappels(p) = \sum_{i=0}^{N} \alpha_i \cdot dec(p-i) + \beta_i \cdot abd(p-i) \;\; \texttt{et,} \;\; \texttt{intentions(p) =}$$

$$\texttt{reçus(p) - rappels(p),}$$

Où N correspond au nombre de périodes sur lesquelles les évaluations des rappels s'effectuent ;

$\alpha_i$ représentant la proportion d'appels déconnectés qui rappellent durant la $i^{eme}$ période suivant la déconnexion ;
$\beta_i$ représentant la proportion d'appels abandonnés qui rappellent durant la $i^{eme}$ période suivant l'abandon ;
p-i représente la période qui précède p de i périodes.

On comprendra mieux l'invention à l'aide de la description, faite ci-après à titre purement explicatif, d'un mode de réalisation de l'invention, en référence aux figures annexées où :

- la figure 1 illustre le principe général d'appel vers un centre d'appel ;

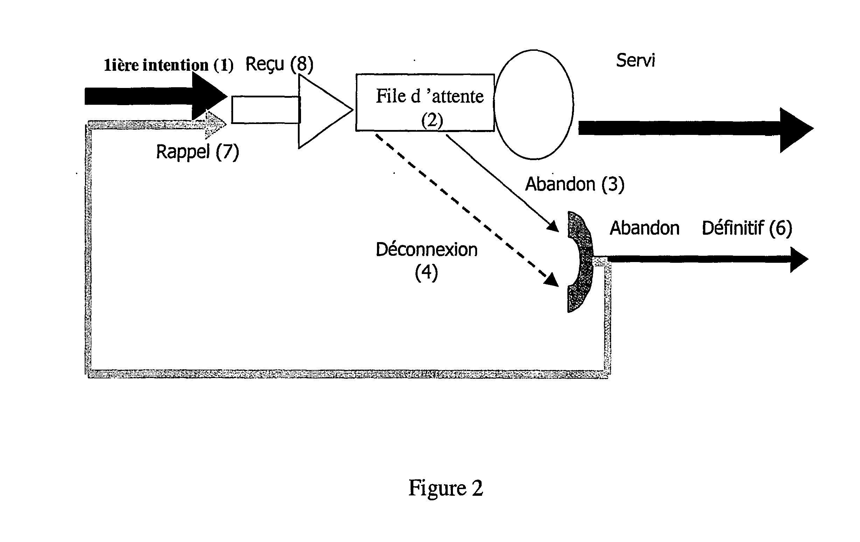

- la figure 2 est un schéma fonctionnel du procédé d'appel et de rappels pour des déconnexions et des abandons.

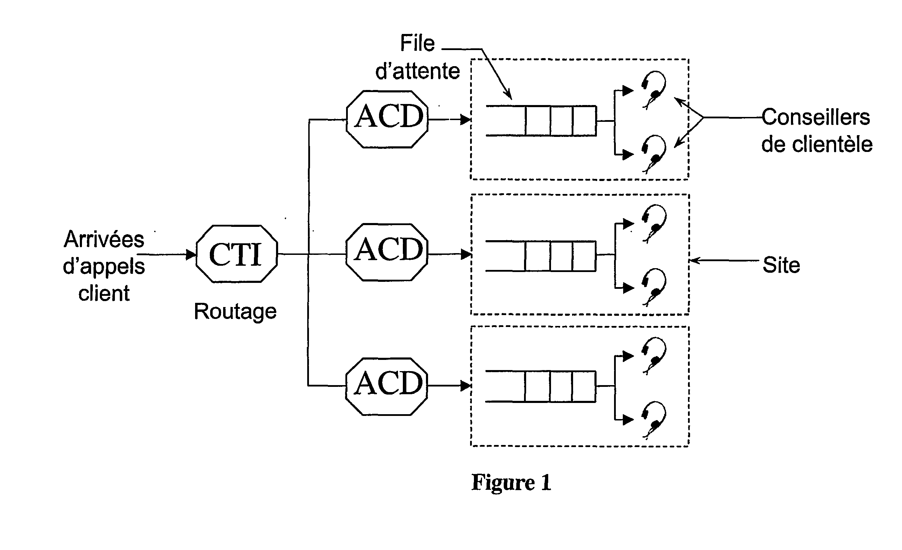

Illustré figure 1, les appels clients arrivent en premier sur un *CTI (Computer Telephony Integration).* À partir des informations fournies par l'ACD *(Automatic Call Dispatcher)* de chaque site, un mécanisme de routage permet de décider vers quel site envoyer l'appel à son arrivée. Une fois l'appel routé et si aucun conseiller de clientèle ne peut répondre dans l'immédiat, il est mis en attente dans une file. Les phénomènes d'abandon et de déconnexion compliquent alors la gestion d'un tel centre d'appel.

En effet, illustré figure 1, considérons un client qui décide de téléphoner au centre d'appels : c'est une première intention d'appel (1). Différentes suites peuvent être données à cet appel.

Tout d'abord, il peut être mis dans une file d'attente (2) et ensuite être servi par un conseiller de clientèle. C'est ce qu'on appelle un appel répondu ou appel servi.

Si cela était possible en termes de ressources, toutes les premières intentions d'appel seraient des appels répondus.

Cependant, un client doit généralement patienter quelques instants avant d'être pris en charge par un conseiller de clientèle. Il est alors possible qu'il mette fin prématurément à son appel : c'est un appel abandonné (3).

Enfin, un client peut appeler alors que le nombre de personnes en attente a atteint une taille limite fixée à la file d'attente. À ce moment, le client est invité à rappeler ultérieurement : c'est un appel déconnecté (4). Parmi les clients ayant abandonné en file ou ayant été déconnectés, une partie abandonne définitivement comme en (6), les autres clients, quant à eux, essayent à nouveau de joindre un conseiller de clientèle : on parle de rappel ou renouvellement d'appel (7).

L'ensemble des appels passés vers les centres de clientèle, quelle que soit la nature de l'appel et son aboutissement, forme les appels reçus (8) (c'est-à-dire l'ensemble des appels répondus, abandonnés et déconnectés).

Les ACD *(Automatic Call Dispatcher,* équipements assurant la distribution des appels aux conseillers de clientèle) permettent, entre autres, de fournir des statistiques sur les appels. Ainsi, les modules de reporting ACD peuvent, par exemple, fournir des informations sur le nombre d'appels reçus ou servis par demi-heure pendant les deux dernières semaines.

Ainsi, de façon générale, il est possible grâce aux ADC d'évaluer les paramètres et variables suivants pour différentes périodes :

$\alpha_i$ représentant la proportion d'appels déconnectés qui rappellent durant la $i^{eme}$ période suivant la déconnexion,

$\beta_i$ représentant la proportion d'appels abandonnés qui rappellent durant la $i^{eme}$ période suivant l'abandon

et N correspond au nombre de périodes sur lesquelles évaluations des rappels s'effectuent.

Les différents coefficients $\alpha_i$ et $\beta_i$ caractérisent le comportement du client face au rappel. Ils ne varient pas en temps réel, et peuvent être par exemple calculés en utilisant une méthode de régression linéaire sur un échantillon représentatif du phénomène de rappel au cours de « journées type » du centre de rappel concerné.

Par ailleurs, on évalue en temps réel durant une période p les statistiques des états des appels grâce aux ADC. On obtient alors pour la période :

*Dec(p)* représentant le nombre d'appels déconnectés durant une période p ;
*Abd(p)* représentant le nombre d'appels abandonnés durant une période p ;
*Reçus(p)* représentant le nombre d'appels reçus durant une période p

Le nombre de rappels durant la période est alors évalué de la façon suivante :

$$rappels(p) = \sum_{i=0}^{N} \alpha_i \cdot dec(p - i) + \beta_i \cdot abd(p - i)$$ où p-i représente la période qui précède p de i périodes.

Le nombre d'intentions d'appels durant une période p est alors obtenu par :

$$intentions(p) = reçus(p) - rappels(p).$$

De nombreuses applications techniques de ce procédé d'évaluation du nombre d'intentions d'appel sont envisageables. Ceci permet bien sûr d'abord de dimensionner les centres d'appels par l'adaptation du nombre de sites ou du nombre de conseillers de clientèle. Ce dimensionnement est alors possible non seulement de façon globale, mais aussi selon les périodes.

EP 1 723 778 B1

Une autre application serait celle de reconstituer des historiques d'intentions d'appels sur la base de ceux concernant les appels reçus, abandonnés et déconnectés. Un autre usage est de permettre l'évaluation de la qualité de service par rapport aux intentions d'appels (plutôt que par rapport aux appels reçus). L'invention permet de faire cette estimation en temps réel et ceci sans mobiliser d'importantes ressources informatiques.

L'invention est décrite dans ce qui précède à titre d'exemple. Il est entendu que l'homme du métier est à même de réaliser différentes variantes de l'invention sans pour autant sortir du cadre du brevet.

**Revendications**

1. Procédé pour l'estimation des intentions d'appels et de rappels dans un centre d'appel, **caractérisé en ce qu'**il comprend les étapes suivantes :

   a) évaluer N correspondant au nombre de périodes sur lesquelles les évaluations des rappels s'effectuent ;
   b) évaluer $\alpha_i$ représentant la proportion d'appels déconnectés qui rappellent durant la $i^{eme}$ période suivant la déconnexion ;
   c) évaluer $\beta_i$ représentant la proportion d'appels abandonnés qui rappellent durant la $i^{eme}$ période suivant l'abandon ;
   d) évaluer les variables des états des appels:

   - *Dec(p)* représente le nombre d'appels déconnectés durant une période p ;
   - *Abd(p)* représente le nombre d'appels abandonnés durant une période p ;
   - *Reçus(p)* représente le nombre d'appels reçus durant une période p ;

   e) estimer le nombre de rappels, *rappels(p)* durant ladite période p, avec

   $$rappels(p) = \sum_{i=0}^{N} \alpha_i \cdot dec(p-i) + \beta_i \cdot abd(p-i),$$ où p-i représente la période qui précède p de i périodes

   f) évaluer le nombre d'intentions d'appels durant une période p, *intentions(p) = reçus(p) - rappels(p)*.

2. Procédé pour l'estimation des intentions d'appels et de rappels dans un centre d'appel selon la revendication 1, **caractérisé en ce que** les coefficients $\alpha_i$ et $\beta_i$ sont calculés par régression linéaire sur au moins un échantillon représentatif.

3. Procédé pour l'estimation des intentions d'appels et de rappels dans un centre d'appel selon la revendication 1, **caractérisé en ce que** ladite estimation est faite sans enregistrement systématique d'un identifiant de chaque appel reçu.

4. Procédé pour l'estimation des intentions d'appels et de rappels dans un centre d'appel selon la revendication 1, **caractérisé en ce que** la capacité dudit centre d'appel est adaptée en fonction de ladite estimation.

5. Système pour l'estimation des intentions d'appels et de rappels dans un centre d'appels comportant un équipement de calcul relié à des équipements associés aux postes de traitement d'appels, **caractérisé en ce que** l'équipement de calcul comporte des moyens de comptage du nombre d'appels déconnectés *Dec,* du nombre d'appels abandonnés *Abd*, du nombre d'appels reçus *Reçus* et un moyen de calcul pour la détermination des coefficients $\alpha_i$, $\beta_i$ et *N*, ainsi qu'un moyen de calcul pour la détermination des variables du nombre de rappels et du nombre d'intentions d'appels

   $$rappels(p) = \sum_{i=0}^{N} \alpha_i \cdot dec(p-i) + \beta_i \cdot abd(p-i) \text{ et, } intentions(p) =$$

   reçus(p) - rappels(p),

   Où N correspond au nombre de périodes sur lesquelles les évaluations des rappels s'effectuent ;

5

EP 1 723 778 B1

$\alpha_i$ représentant la proportion d'appels déconnectés qui rappellent durant la $i^{eme}$ période suivant la déconnexion ;
$\beta_i$ représentant la proportion d'appels abandonnés qui rappellent durant la $i^{eme}$ période suivant l'abandon ;
p-i représente la période qui précède p de i périodes.

6. Système pour l'estimation des intentions d'appels et de rappels dans un centre d'appels selon la revendication 5, **caractérisé en ce qu'**il comprend au moins un Automatic Call Dispatcher (ACD).

**Claims**

1. Method for estimating call intentions and callbacks in a call centre, **characterised in that** it comprises the following steps:

   a) assessing N corresponding to the number of periods in which the callback assessments are made;
   b) assessing $\alpha_i$ representing the proportion of disconnected calls that call back during the $i^{th}$ period following disconnection;
   c) assessing $\beta_i$ representing the proportion of dropped calls that call back during the $i^{th}$ period following the drop;
   d) assessing call status variables:

      - *Disc(p)* represents the number of calls disconnected during a period p;
      - *Drop(p)* represents the number of calls dropped during a period p;
      - *Rec(p)* represents the number of calls received during a period p;

   e) estimating the number of callbacks *callbacks(p)* during said period p, where

   $$callbacks(p) = \sum_{i=0}^{N} \alpha_i \cdot disc(p-i) + \beta_i \cdot drop(p-i) \text{ , where p-i represents the period preceding p}$$

   by i periods;
   f) assessing the number of call intentions during a period p, *intentions(p) = rec(p) - callbacks(p)*.

2. Method for estimating call intentions and callbacks in a call centre according to claim 1, **characterised in that** the coefficients $\alpha_i$ and $\beta_i$ are calculated by linear regression on at least one representative sample.

3. Method for estimating call intentions and callbacks in a call centre according to claim 1, **characterised in that** said estimate is made without systematically registering an identifier of each call received.

4. Method for estimating call intentions and callbacks in a call centre according to claim 1, **characterised in that** the capacity of said call centre is adapted according to said estimate.

5. System for estimating call intentions and callbacks in a call centre comprising computing equipment connected to equipment associated with call-processing equipment, **characterised in that** the calculation equipment comprises means for counting the number of disconnected calls *Disc,* the number of dropped calls *Drop,* the number of calls received *Rec*, and calculation means for determining the coefficients $\alpha_i$, $\beta_i$ and *N*, as well as calculating means for determining variables of the number of callbacks and call intentions

$$callbacks(p) = \sum_{i=0}^{N} \alpha_i \cdot disc(p-i) + \beta_i \cdot abd(p-i) \text{ and, } intentions(p) = rec(p)$$

$$- callbacks(p),$$

   Where N corresponds to the number of periods in which the callback assessments are made;
   $\alpha_i$ representing the proportion of disconnected calls that call back during the $i^{th}$ period following disconnection;
   $\beta_i$ representing the proportion of dropped calls that call back during the $i^{th}$ period following the drop;
   p-i represents the period preceding p by i periods.

6

6. System for estimating call intentions and callbacks in a call centre according to claim 5, **characterised in that** it includes at least one Automatic Call Dispatcher (ACD).

**Patentansprüche**

1. Verfahren für die Schätzung der Anruf- und der Anrufwiederholungsabsichten in einem Call Center, **dadurch gekennzeichnet, dass** es die nachstehenden Schritte umfaßt:

   a) N Gesprächspartner über die Anzahl Zeiträume bewerten, in denen die Bewertungen der Anrufwiederholung durchgeführt werden;
   b) $\alpha_i$ bewerten, das den Anteil erfolgloser Anrufe darstellt, die während des i. Zeitraums nach dem Abbruch erneut anrufen;
   c) $\beta_i$ bewerten, das den Anteil aufgegebener Anrufe darstellt, die während des i. Zeitraums nach der Aufgabe erneut anrufen;
   d) Die Variablen der Anrufaufstellungen bewerten:

   - *Dec(p)* stellt die Anzahl erfolgloser Anrufe in einem Zeitraum p dar;
   - *Abd(p)* stellt die Anzahl aufgegebener Anrufe in einem Zeitraum p dar;
   - *Reçus(p)* stellt die Anzahl erhaltener Anrufe in einem Zeitraum p dar;

   e) Die Anzahl erneuter Anrufe *rappels(p)* im besagten Zeitraum p schätzen mit

   $$rappels(p) = \sum_{i=0}^{N} \alpha_i \bullet dec(p-i) + \beta_i \bullet abd(p-i)$$

   wobei p-i den Zeitraum darstellt, der p um i Zeiträume vorausgeht.
   f) Die Anzahl Anrufabsichten in einem Zeitraum p bewerten, *Absichten (p) = reçus(p) - rappels(p)*.

2. Verfahren für die Schätzung der Anruf- und der Anrufwiederholungsabsichten in einem Call Center nach Anspruch 1, **dadurch gekennzeichnet, dass** die Koeffizienten $\alpha_i$ und $\beta_i$ mit linearer Regression auf mindestens einem repräsentativen Muster berechnet werden.

3. Verfahren für die Schätzung der Anruf- und der Anrufwiederholungsabsichten in einem Call Center nach Anspruch 1, **dadurch gekennzeichnet, dass** die besagte Schätzung ohne systematische Aufzeichnung einer Kennung jedes erhaltenen Anrufs durchgeführt wird.

4. Verfahren für die Schätzung der Anruf- und der Anrufwiederholungsabsichten in einem Call Center nach Anspruch 1, **dadurch gekennzeichnet, dass** die Kapazität des besagten Call Centers je nach der besagten Schätzung angepaßt wird.

5. System für die Schätzung der Anruf- und der Anrufwiederholungsabsichten in einem Call Center, das eine Rechenausrüstung umfaßt, die mit zu den Posten für die Anrufverarbeitung zugehörigen Ausrüstungen verbunden ist, **dadurch gekennzeichnet, dass** die Rechenausrüstung Mittel zum Zählen der Anzahl erfolgloser Anrufe *Dec,* der Anzahl aufgegebener Anrufe *Abd*, der Anzahl erhaltener Anrufe *Reçus* umfaßt und ein Rechenmittel für die Bestimmung der Koeffizienten $\alpha_i$, $\beta_i$ und *N*, sowie ein Rechenmittel für die Bestimmung der Variablen der Anzahl Anrufwiederholungen und der Anzahl Anrufwiederholungsabsichten

$$rappels(p) = \sum_{i=0}^{N} \alpha_i \bullet dec(p-i) + \beta_i \bullet abd(p-i) \quad \text{und,} \quad \text{Absichten(p) = reçus(p)}$$

$$- \text{rappels(p),}$$

wobei N der Anzahl Zeiträume entspricht, über die die Bewertungen der Anrufwiederholungen durchgeführt werden;
Wobei $\alpha_i$ den Anteil erfolgloser Anrufe darstellt, die im i. Zeitraum nach dem Abbruch erneut anrufen;
Wobei $\beta_i$ den Anteil aufgegebener Anrufe darstellt, die im i. Zeitraum nach der Aufgabe erneut anrufen;
p-i stellt den Zeitraum dar, der p um i Zeiträume vorausgeht.

6. System für die Schätzung der Anruf- und der Anrufwiederholungsabsichten in einem Call Center nach Anspruch 5, **dadurch gekennzeichnet, dass** es mindestens einen Automatic Call Dispatcher (ACD) umfaßt.

Figure 1

1ière intention (1)  Reçu (8)

Servi

File d 'attente
(2)

Rappel (7)

Abandon (3)

Déconnexion
(4)

Abandon    Définitif (6)

Figure 2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5905793 A, Lucent
- WO 0163894 A
- US 20010000458 A